(19) **Europäisches Patentamt / European Patent Office / Office européen des brevets**

(11) **EP 4 726 306 A1**

(12) **EUROPEAN PATENT APPLICATION**
published in accordance with Art. 153(4) EPC

(43) Date of publication:
**15.04.2026  Bulletin 2026/16**

(21) Application number: **24738007.4**

(22) Date of filing: **29.05.2024**

(51) International Patent Classification (IPC):
*F27B 3/04* (2006.01)    *F27B 3/28* (2006.01)
*F27B 19/04* (2006.01)    *F27D 17/00* (2025.01)
*F27D 19/00* (2006.01)    *C22B 1/00* (2006.01)
*C22B 21/00* (2006.01)

(52) Cooperative Patent Classification (CPC):
**C22B 1/005; C22B 21/0007; F27B 3/045;**
**F27B 3/28; F27B 19/04; F27D 17/10; F27D 19/00;**
F27D 2019/0003; F27D 2019/0006;
F27D 2019/0031; F27D 2019/0034

(86) International application number:
**PCT/ES2024/070326**

(87) International publication number:
**WO 2024/252043 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.06.2023  ES 202330469**

(71) Applicant: **INDUSTRIAL FURNACES INSERTEC, S.L.**
**48970 Basauri (Vizcaya) (ES)**

(72) Inventors:
• **TABERNERO CAMPOS, Iván**
**48970 Basauri Vizcaya (ES)**
• **LAZCANO BUSTO, Ester**
**48970 Basauri Vizcaya (ES)**

(74) Representative: **Ungria López, Javier**
**Avda. Ramón y Cajal, 78**
**28043 Madrid (ES)**

(54) **MATERIAL DELACQUERING AND MELTING EQUIPMENT**

(57)    The present invention relates to a material delacquering and melting equipment. The equipment comprises a delacquering unit (1) into which material to be treated (3) enters and from which clean material (5) exits and into which clean gases (7) enter that circulate in the opposite direction to that of travel of the material to be treated (3) dragging coatings of said material and coming out as toxic gases (9); a furnace (10) to which the toxic gases (9) from the delacquering unit (1) and the clean material (5) arrive and in said furnace (10) these gases are burned to make them inert (clean gases (7)) and recirculate same to the delacquering unit (1) and the material is melted to obtain molten material (18); and a control system that acts on at least a second parameter of an element of the equipment based on a measurement of a first parameter of another element of the equipment.

FIG.1

## Description

## OBJECT OF THE INVENTION

The object of the present invention falls within the sector of equipment for treating materials, more specifically waste materials. The invention discloses a material delacquering and melting equipment that allows optimising the performance of said processes and reduces both energy consumption and carbon footprint.

## TECHNICAL PROBLEM TO BE RESOLVED AND BACKGROUND OF THE INVENTION

Currently, in waste material recycling operations, in most cases, delacquering is carried out prior to melting the material. This prior step avoids the generation of toxic gases during the melting process of the waste material and minimises the generation of slag in the molten material. For this purpose, there are known installations comprising, on the one hand, a delacquering unit and a post-combustion chamber and, on the other hand, a furnace or equipment for melting the material that is already free of lacquer (lacquer, paint or coatings).

As described, carrying out a delacquering process prior to melting is essential to avoid the generation of toxic components and the generation of excessively high volumes of slag. With the delacquering process, the waste material is cleaned, eliminating any lacquer, paint or coating with which it arrived at the installation.

Currently, delacquering is carried out in a delacquering unit, which is a thermal equipment in which paints, lacquers and coatings are removed from the waste material through a continuous pyrolytic process. To carry out this process, the delacquering unit uses gases at high temperatures that circulate in the opposite direction to that of the circulation of the waste material to be delacquered, that is, the delacquering is carried out through a pyrolysis process. Said gases, thanks to their high temperatures and their direction of movement in counterflow to the material to be treated, drag along lacquers, paints and/or coatings.

Thus, these gases at high temperatures drag along the dirt generated (remnants of lacquers, paints and coatings) and therefore it is necessary to send them to a post-combustion chamber in which the toxic components (dioxins and furans) are eliminated before being able to release same into the environment. To eliminate these toxic components, the gases are subjected to a temperature greater than or equal to 850 °C. Once the toxic components have been eliminated, the gases go through a filtering system and are released into the environment.

At the outlet of the delacquering unit, the material to be treated is at about 250 °C and can be stored or transported to a melting furnace (for example a reverberatory furnace) or the element of the installation in which it is to be melted.

The most important technical problem associated with these processes is the high energy consumption of the post-combustion chamber to which the gases leaving the delacquering unit are sent to eliminate toxic components. Another technical problem associated with these processes is that the performance is reduced because the material to be treated, despite the fact that it exits at a high temperature from the delacquering unit, is stored and/or transported to the furnace in which the melting is to be carried out, cooling down greatly so that, upon reaching said furnace, its temperature is no longer as high as at the outlet of the delacquering unit.

## DESCRIPTION OF THE INVENTION

The invention relates to a delacquering and material melting equipment. This equipment improves performance compared to state-of-the-art installations, reduces energy consumption and reduces carbon footprint. Likewise, the present invention proposes a material delacquering and melting method carried out in said equipment.

Preferably the equipment and the method are used with metallic materials and in an even more preferred embodiment with aluminium.

One of the keys to the present invention is that a delacquering unit and a melting furnace are contained in a single piece of equipment. That is, the equipment combines the delacquering and melting processes and eliminates the need to have an intermediate post-combustion chamber. As described, in the solutions of the state of the art, the postcombustion chamber is essential to eliminate toxic compounds from the gases that exit from the delacquering unit (those dragging along the lacquer, paint or coating of the material during the pyrolysis process). In the proposed equipment, the elimination of toxic compounds from the gases coming from the delacquering unit is directly carried out in the main furnace chamber where the melting of the material takes place. Likewise, the gases that have already been free of toxic particles are returned, totally or partially, to the delacquering unit.

Therefore, with the equipment of the invention, high energy savings are achieved since it is not necessary to pass the gases through the intermediate post-combustion chamber, thus saving the energy expenditure associated therewith. Energy savings are also achieved due to the fact that the gases that are recirculated from the melting furnace to the delacquering unit are already at a high temperature and do not have to be heated. Likewise, with the equipment of the present invention, carbon footprint is reduced. That is, it is a much less polluting solution than that which is currently used.

In the equipment of the present invention, the already cleaned material (without lacquers, paints or coatings) that exits from the delacquering unit is sent to the furnace, so the material reaches the furnace at practically the same temperature at which it leaves the delacquering unit (there is barely any temperature loss in the material). In this way, the melting process is optimised (the material must be heated from a temperature that is already higher) and the energy performance of the process is improved. Similarly, the energy used to melt the material in the furnace is partially reused to clean the material in the delacquering unit (due to the recirculation of the already cleaned gases from the furnace, from where they leave at a high temperature, to the delacquering unit).

An advantage associated with the recirculation of the gases from the delacquering unit to the melting furnace is that the presence of volatile compounds acts in turn as extra fuel in the melting furnace, which allows reducing the power contributed to the melting process, thus improving the overall energy efficiency of the entire process.

Another of the keys to the present invention is that the equipment comprises a control system configured to measure at least a first parameter in the delacquering unit and based on that measurement, act on at least a second parameter in another element of the equipment. In this way, both processes (delacquering and melting) are simultaneously regulated in a balanced way to achieve maximum operating efficiency of the equipment. Thus, the control system allows the parameters of each of the processes to be adjusted depending on the other, reaching a compromise that provides the greatest energy efficiency.

The control system is also adaptable depending on the percentage of volatile organic compounds present in the waste material to be treated. Preferably the control system allows an adjustment of the control parameters (such as the first parameter and the second parameter) to assume the operation of the equipment with materials to be treated comprising (but not limited to) 10% of volatile organic compounds.

The delacquering unit comprises a rotating drum where the delacquering method is carried out through pyrolysis. Preferably, the equipment also comprises, between the delacquering unit and the melting furnace, an intermediate cyclone for collecting dust and ashes generated in the delacquering process. The delacquering unit and the cyclone are linked to each other through a first recirculation duct and the cyclone is in turn linked to the melting furnace through a second recirculation duct. In said second recirculation duct there is a controlled flow recirculation fan.

The melting furnace of the equipment comprises a main furnace chamber that has a main entrance through which large pieces of material (for example aluminium profiles) are introduced into the furnace and has a main door configured to open/close said main entrance. Likewise, the furnace comprises a lateral feeding system with a lateral chamber (joined to a main furnace chamber) through which the material from the delacquering unit is introduced. The furnace preferably comprises a vortex generating mechanism responsible for generating a vortex or swirl in the melt (the material that is already in the furnace and that is already molten) so that, when the material that comes from the delacquering unit is introduced in the furnace, the vortex causes said material to be quickly immersed in the melt, preventing the oxidising thereof or the generation of slag.

In the present invention, as the toxic gases coming from the delacquering unit are sent to the furnace, a solution is required to prevent said gases from escaping from the main furnace chamber before having been subjected to the temperatures and times required for the elimination of toxic compounds that are present therein. The solution proposed in the present invention is related to the configuration of the main furnace chamber and is that said main chamber is domed. This allows the gases to be retained in the upper part of the main furnace chamber where the dome is located. In this way, even if the main furnace door is opened, the gases continue to be retained inside the main chamber.

In one exemplary embodiment of the invention, the furnace comprises a plurality of holes homogeneously distributed in the main chamber through which the gases from the delacquering unit are introduced into the main chamber.

The combustion system of the melting furnace of the equipment is capable of generating sufficient energy to maintain the material molten inside the furnace (temperature, for example, of an aluminium bath around 750 - 850 °C) and to maintain the temperature in the main chamber (ceiling temperature of the main furnace chamber around 1000-1100 °C) at the same time.

Thus, in the equipment of the invention, the gases coming from the delacquering unit are combusted in the main furnace chamber to become inert gases (clean gases). A portion of these gases, now free of toxic products, is sent back to the delacquering unit (depending on the needs of the complete process, that is, the combination of delacquering and melting) and another portion is evacuated, through a system filtration, to the atmosphere. Therefore, a part or all of the power supply to the delacquering unit is obtained from the hot gases extracted from the melting furnace.

The equipment also comprises a gas extraction system through which gases are extracted from the circuit if it is detected that the pressure is too high.

With the equipment and method of the present invention, a cleaner material is obtained and overall energy consumption is reduced by combining the thermal processes of delacquering and melting and the absence of an intermediate post-combustion chamber between the delacquering unit and the melting furnace.

The rotation speed of the drum of the delacquering unit is adjustable depending on the percentage of volatile organic compounds in the material to be treated. This rotation speed determines the residence time of the material to be treated in the delacquering unit and is defined as:

$$Tr(\min) = \left(\frac{W}{P}\right) * 60$$

Wherein Tr is residence time, in minutes, of the material to be treated inside the delacquering unit; W is the weight in tons of the material to be treated that is introduced into the delacquering unit; and P is the desired production rate in tons/hour.

The rotation speed of the drum of the delacquering unit and therefore the residence time are selected based on the material to be treated (a drum of a delacquering unit is not designed in the same way if, for example, aluminium profiles or cans are to be treated). The parameter that defines the residence time is set by a compromise between the optimal degree of cleaning and a surface of the non-oxidised clean material (material at the outlet of the delacquering unit). If the residence time is low, the material to be treated is not delacquered and, if the residence time is too high, the material to be treated oxidises due to the temperature. The optimal degree of cleaning, which defines the optimal residence time, is defined based on the type of material to be treated.

A first control loop executable by the control system determines the rotation speed of the recirculation fan. With this first loop, the flow of recirculation gases that are sent from the delacquering unit to the furnace is controlled. Thus, the first control loop comprises a step of measuring a first parameter, which is the temperature of the clean material at the outlet of the delacquering unit, and acting on a second parameter, which is the rotation speed of the recirculation fan.

This first control loop also comprises an exception in which the open/closed position of the main furnace door is determined. If the main door is open, it is necessary to reduce the gas recirculation speed to prevent oxygen and cold air from entering into the equipment. In this case, the first control loop is interrupted and said gas recirculation speed is directly reduced.

The temperature of the clean material at the outlet of the delacquering unit is an indicator of how clean said material is. To execute this first control loop, the equipment comprises a first thermocouple that measures the temperature of the material to be treated at the inlet of the delacquering unit and the temperature of the clean material at the outlet of the delacquering unit. Depending on the measurement taken by the thermocouple and the percentage of volatile organic compounds in the material to be treated, a reference value is selected. The higher the percentage of volatile organic compounds in the material to be treated, the higher the reference value will be, which is preferably between 450-550 °C.

The output of this first control loop is sent to two actuators and an output signal determines the relative position between a first valve and a second valve. The first valve is configured to regulate the amount of toxic gases that are recirculated from the delacquering unit to the furnace (and which are at a lower temperature) and the second valve is configured to regulate the amount of clean gases that are recirculated from the furnace to the delacquering unit (and which are at a higher temperature).

The equipment may comprise a second thermocouple configured to measure the temperature of the toxic gases in the duct connecting the delacquering unit and the cyclone. This temperature must be sufficient to ensure correct processing of the dust particles of the toxic gases coming from the delacquering unit. The control system compares the temperature obtained by the second thermocouple and takes into account the percentage of volatile organic compounds of the material to be treated to determine a temperature range outside of which the processing of the volatile compounds of toxic gases is not adequately carried out. The higher this percentage is, the greater the reference temperature value, which is, preferably, between 350-500 °C.

The equipment comprises a by-pass valve through which more or less hot air is introduced into the cyclone based on the result of the temperature measurement at the inlet of the cyclone and the corresponding reference value (depending on the percentage of volatile compounds of the material to be treated).

With a second control loop, the amount of oxygen inside the delacquering unit is regulated. This is essential to ensure a safe delacquering process, avoiding possible ignitions, and also an adequate level of oxygen in the main chamber of the melting furnace ensures proper combustion of the volatile organic compounds. The equipment comprises an oxygen measurement sensor in the delacquering unit that provides a measurement of the percentage of oxygen inside said delacquering unit. The reference value for setting the control is, preferably, less than or equal to 5% (again, like the rest of the reference values, this is determined based on the percentage of volatile compounds in the material to be treated). This second control loop regulates the opening/closing of an oxygen gate valve to the burners of the melting furnace, thus regulating the percentage of oxygen in the combustion ramp in the melting furnace burners to introduce more or less oxygen depending on the amount of oxygen detected in the delacquering unit. If an oxygen value higher than the reference value is detected in the delacquering unit, the control system acts on the oxygen gate valve to the burners to reduce the oxygen supplied to the furnace burners.

The control system executes a third control loop. This third control loop ensures a seal in the delacquering unit that prevents possible oxygen leaks and unwanted gas emissions from said delacquering unit. To do this, the equipment comprises a pressure sensor in the delacquering unit that measures the pressure of the toxic gases at the outlet of the delacquering unit. The preferred reference value is between 0 and -5 mm $H_2O$ and more preferably between 0 and -1 mm $H_2O$. The equipment comprises a gas extraction system to remove gases (already clean) from the furnace to the outside, thus regulating the pressure in the equipment, and more specifically in the delacquering unit (by reducing the volume of gases in the furnace, the pressure of the gases in the complete circuit and therefore in the delacquering unit is reduced). The third control loop acts on a gas gate valve from the furnace to the gas extraction system and it is this parameter that is acted upon based on the pressure detected in the delacquering unit.

A method for delacquering and melting of materials that is carried out in the equipment previously described is also protected. The waste material is loaded into the delacquering unit, preferably controlling the weight through an equipment weighing system. Said loading is carried out, also preferably, in continuous. In the delacquering unit this material is dried, delacquered, and preheated. Subsequently, when the material is already clean, it exits from the delacquering unit and is sent to the melting furnace, where it enters, preferably, by passing through the vortex generated by the vortex generating mechanism.

In the melting furnace, the already cleaned waste material is melted and heated to the required casting temperature in continuous.

Likewise, the gases that are used to carry out the delacquering and that drag along the remains of lacquer, paint or coating of the waste material are recirculated from the delacquering unit to the melting furnace chamber where they are burned until they become inert.

Preferably, before entering the melting furnace chamber, the gases pass through a cyclone to remove small particles and dust from said gases.

When the gases enter the main furnace chamber, they do so, in a preferred embodiment, through orifices homogeneously distributed such that they are uniformly distributed inside said chamber where they are maintained for a certain residence time and are subjected to a certain temperature sufficient to guarantee the destruction of the dangerous compounds that had previously been generated in the delacquering unit.

When these gases have already been burned and incinerated in the furnace chamber, they can exit mixed with the gases generated during the combustion of the material (gases generated during the melting process of the material). The gases are partially or entirely sent to the atmosphere through a filter (to prevent solid contaminating particles from reaching the atmosphere). Preferably, the output gases from the melting chamber are partially redirected to the delacquering unit to be reused in the delacquering process. The amount of gases to be recirculated will depend, in an embodiment of the invention, on the temperature required to carry out the delacquering process in the delacquering unit so that the energy required for said process can be obtained simply with the gases that are recirculated from the melting furnace.

In a preferred exemplary embodiment, the gases coming out of the melting furnace and that are going to be sent to the atmosphere through a filter or filtration system, must be previously cooled down to avoid the regeneration of dioxins and furans and to be able to be treated in the filter or filtration system. This cooling can be carried out with the medium temperature gases that are released from the recirculation fan and the cold air extracted from the clean material inlet of the lateral chamber, in a specific combination of gas flows that depends on the temperature resulting from the gases after mixing.

One of the technical problems that arise when combining the delacquering unit and the melting furnace in the same equipment is to keep the operation of both elements of the equipment balanced so that their functions are not altered as a result of said combination. To solve this, as previously described, the control system of the equipment is essential.

When the equipment and method are used for aluminium scrap recycling, the volatile organic compounds exhibit highly exothermic behaviour. When a waste material like this is melted, a lot of energy and gaseous products are simultaneously generated, influencing the productivity, the cost of recycling and the quality of the molten material, in this case molten aluminium, and its suitability for the production of transformed aluminium alloys for high quality end products.

Regarding the method for delacquering and melting of materials that is carried out in the equipment, same comprises at least the following steps:

a) introducing material to be treated into the equipment through the material inlet of the delacquering unit and circulate said material to be treated in a direction of travel through the delacquering unit toward the clean material outlet;

b) introducing clean gases through the clean gas inlet of the delacquering unit and circulating said clean gases through the delacquering unit in a direction opposite to that of travel of the material to be treated to a toxic gas outlet;

c) introducing into the furnace, through the clean material inlet, the clean material that exits from the delacquering unit and heat said clean material until it melts and sending the molten material to a molten material outlet;

d) recirculating the toxic gases from the delacquering unit to the furnace using the recirculation fan;

e) introducing said toxic gases from the delacquering unit into the furnace through the toxic gas inlet, heating same in the main furnace chamber until reaching a predetermined temperature that allows the toxic compounds of the toxic gases to be broken down and maintain same at said temperature for a predetermined period of time that allows the inerting process of toxic compounds to be completed;

f) extracting the clean gases from the furnace where at least a part of said clean gases is extracted through the clean gas outlet and sent to the clean gas inlet of the delacquering unit;

and, in continuous, measuring with the control system the at least one first parameter in the delacquering unit and based on said measurement acting on the at least one second parameter in another element of the equipment.

Therefore, with the present invention, the expense of having a postcombustion chamber between the delacquering unit and the melting furnace is avoided, the total energy consumption of the process is reduced, while maintaining excellent thermal performance of the waste material (scrap) and, therefore, the highest possible material recovery (metal yield) is achieved.

## BRIEF DESCRIPTION OF THE FIGURES

To complete the description, and for the purpose of helping to make the features of the invention more readily understandable, this description is accompanied by a set of drawings constituting an integral part of the same, which by way of illustration and not limitation represents the following:

> Figure 1 represents a view of the equipment of the invention.
> Figure 2 schematically represents the directions of travel of the material and gases in the equipment.

## DETAILED DESCRIPTION

The present invention should not be limited to the embodiment described herein. Other configurations may be carried out by those skilled in the art based on the present description. Accordingly, the scope of the invention is defined by the following claims.

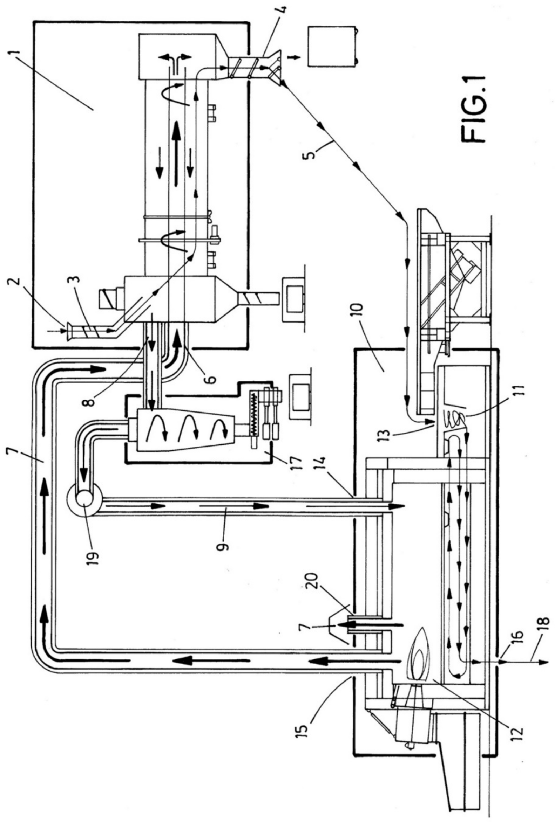

Figure 1 shows the material delacquering and melting equipment of the present invention. The equipment comprises a delacquering unit (1) that has an inlet for the material to be treated (2) through which it is introduced waste material to be treated (3) that has lacquer, paint or some type of coating and has an outlet for material (4) through which exits clean and preheated material (5). Likewise, the delacquering unit (1) comprises a clean gas inlet (6) through which clean gases (7) are introduced that circulate through the delacquering unit in the opposite direction to a direction of travel of the waste material to be treated (3), and a toxic gas outlet (8) through which exit toxic gases (9) that drag along the lacquer, paint or coating of the waste material to be treated (3).

As can also be seen in said figure 1, the equipment comprises a melting furnace (10) with a lateral chamber (11) and a main chamber (12) joined together and wherein the lateral chamber comprises at least one clean material inlet (13) through which the clean material (5) that exits from the delacquering unit is introduced and wherein the main chamber (12) comprises at least one toxic gas inlet (14) connected to the toxic gas outlet of the delacquering unit (1), a clean gas outlet (15) connected to the clean gas inlet (6) of the delacquering unit (1) and a molten material outlet (16) through which exits, already molten, the clean material that has been introduced through the clean material inlet (13) of the lateral chamber (11).

Likewise, the equipment comprises a gas recirculation fan (19) that is arranged between the delacquering unit (1) and the furnace (10). In the equipment, gas recirculation is essential and, as it is a closed circuit, a recirculation fan (19) is sufficient to control said recirculation throughout the entire equipment (as previously seen, all the parameters are related to each other in some way and acting on one of them modifies the conditions in the entire equipment and regulates the delacquering and melting processes). Preferably, the equipment also comprises a cyclone (17) in which the solid particles of the toxic gases (8) are burned. Said cyclone (17) can be connected to the toxic gas outlet (8) of the delacquering unit (1) through a first duct and to the toxic gas inlet (14) of the furnace (1) through a second duct. In this exemplary embodiment, the recirculation fan (19) is arranged downstream of the cyclone (17) in the second duct.

In one exemplary embodiment, the melting furnace (10) of the equipment is a reverberatory furnace. Said furnace (10) comprises in its main chamber (12) a main gate intended to allow large elements, such as aluminium profiles, to be introduced into the furnace (10). The opening/closing of said main gate entails modifying the conditions inside the main chamber (12) and it is necessary to control said conditions to ensure correct operation of the equipment. Due to said main gate, larger elements can be introduced into the furnace that allow the generation of a melt (made of molten material (18)) that ensures correct operation of the furnace (10). In said melt, the clean material (5) from the delacquering unit (1) is melted, also contributing to the operation of the furnace (10). The furnace (10) comprises at least one oxygen gate valve to furnace burners.

Likewise, the equipment comprises a gas extraction system with at least one gas gate valve to said gas extraction system.

To control the processes of delacquering and melting of the material in a combined manner, the equipment comprises a control system. Said control system is configured to act on at least a second parameter of an element of the equipment based on the measurement of a first parameter of the delacquering unit (1) and a reference value that depends on the type of material to be treated (3).

The first parameter is preferably selected from the temperature of the clean material (5) at the outlet of the delacquering unit (1), the amount of oxygen in the delacquering unit (1), and the pressure in the delacquering unit (1). Based on the measurement of said first parameter of the delacquering unit (1), a second parameter of another element of the equipment is modified. Said second parameter is selected from the rotation speed of the recirculation fan (19), the position of an oxygen valve to the furnace burner and the position of a gas gate valve to a gas extraction system of the equipment.

In more detail, the equipment comprises a first thermocouple configured to measure the temperature of the clean material (5) at the outlet of the delacquering unit and, based on said measurement and a temperature reference value (which depends on the type of material to be treated (3)) the control system acts on the rotation speed of the recirculation fan (19).

Likewise, the equipment comprises a sensor for measuring the amount of oxygen in the delacquering unit (1) such that the control system, based on said measurement and a reference value for the amount of oxygen (which depends on the type of material to be treated (3)) acts on the oxygen gate valve to the furnace burners (10).

Additionally, the equipment comprises a pressure measurement sensor in the delacquering unit (1) such that the control system, based on said measurement and a pressure reference value in the delacquering unit (1), acts on the gas gate valve to the gas extraction system of the equipment.

Also Figure 1 shows the embodiment in which the equipment comprises a cyclone (17) arranged between the toxic gas outlet (8) of the delacquering unit (1) and the toxic gas inlet (14) of the furnace (10) such that the toxic gases (9) pass through the cyclone (17), same being free of solid particles. The cyclone (17) is connected to the toxic gas outlet (8) of the delacquering unit through a first recirculation duct and to the toxic gas inlet (14) of the melting furnace through a second recirculation duct. Additionally, in said second recirculation duct, the equipment comprises a recirculation fan (19). Thus, when the toxic gases (9) reach the furnace (10) after passing through the cyclone (17), they arrive already without solid particles and the generation of slags and impurities in the molten material (18) is avoided when said toxic gases (9) are burned in the furnace (10).

In one embodiment of the invention, the lateral chamber (11) of the furnace (10) comprises a vortex generation mechanism configured to generate a vortex in the molten material (18) which is in said first lateral chamber (11). The furnace (10) of the equipment is, in a possible embodiment, a reverberatory furnace. Due to the generation of the vortex in the lateral chamber (11), the clean material (5) that reaches the furnace (10) from the delacquering unit (1) is immersed more quickly in the melt and thus the oxidising thereof and the generation of slag are avoided, in addition to allowing material melting rates of up to, but not limited to, 15 Tn/h.

Preferably the vortex generation mechanism is oriented so that the vortex generated is facing the clean material inlet (13) such that the clean material (5) entering the furnace (10) reaches the main chamber (12) by passing through the vortex generated in the molten material (18) located in the lateral chamber (11).

As can be seen in the embodiment of Figure 1, in the main chamber (12) of the furnace (10) there is an additional gas outlet (20) through which clean gases (7) exit from the main chamber (12) to the environment. Preferably, in this case, the equipment additionally comprises a gas filtering system arranged downstream of the additional outlet (20). Furthermore, said additional outlet (20) is connected to the gas extraction system of the equipment.

The amount of clean gases (9) that exit from the furnace through the clean gas outlet (15) to be redirected to the delacquering unit (1) and the amount of clean gases (9) that exit from the furnace (10) directly to the outside without being recirculated depends on the pressure in the delacquering unit (1).

Preferably, in the equipment of the invention the main chamber (12) of the furnace (10) has a domed configuration. This prevents gas leakage when the main gate is opened. As the gases have a lower density than that in air, they are retained in the dome at the top of the main chamber (12). This configuration is especially important in the equipment of the invention because it is in said main chamber (12) where the toxic gases (9) from the delacquering unit are burned until they become inert. Due to the domed configuration, the possible output of gases into the atmosphere before they have been burned is avoided.

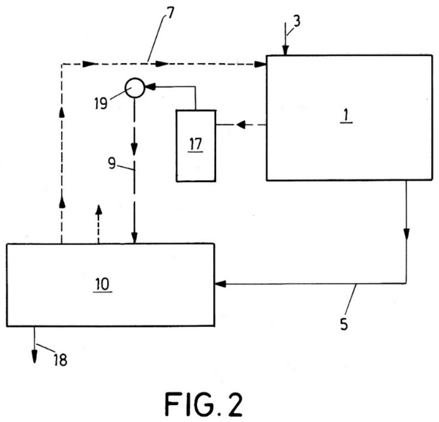

Figure 2 shows the directions of travel of the material and gases in the equipment.

It is also an object of the present invention a material delacquering and melting method in an equipment such as that which is previously described. Said method comprises the following steps:

a) introducing material to be treated (3) into the equipment through the material inlet (2) of the delacquering unit (1) and circulating said material to be treated (3) in a direction of travel through the delacquering unit toward the clean material outlet (4);
b) introducing clean gases (7) through the clean gas inlet (6) of the delacquering unit (1) and circulating said clean gases (7) through the delacquering unit (1) in a direction opposite to that of travel of the material to be treated (3) to a toxic gas outlet (8);
c) introducing into the furnace (10), through the clean material inlet (13), the clean material (5) that exits from the delacquering unit (1) and heating said clean material (5) until it melts and sending the molten material (18) to a molten material outlet (16);
d) recirculating toxic gases from the delacquering unit up to the furnace;
e) introducing the toxic gases (9) from the delacquering unit (1) into the furnace (10) through the toxic gas inlet (14), heating same in the main chamber (12) of the furnace (10) until reaching a predetermined temperature that allows the toxic compounds of the toxic gases (9) to be burned and keeping same at said temperature for a predetermined time that allows the burning process of the toxic compounds to be completed;
f) extracting the clean gases (7) from the furnace (10) where at least a part of said clean gases (7) is extracted through the clean gas outlet (15) and sent to the clean gas inlet (6) of the delacquering unit (1); and

g) in continuous, measuring with the control system the at least one first parameter of the delacquering unit (1) and based on said measurement and a reference value that depends on the type of material to be treated (3) acting on the at least one second parameter of an element of the equipment.

Preferably, in step f), the clean gases (7) are partially extracted from the furnace (10) to the atmosphere through the additional outlet (20). In this case, the method comprises a step of sending the clean gases (7) that exit through the additional outlet (20) to a filtering system.

Also preferably in step c) of the method, the clean material (5) is passed through the vortex generated in the lateral chamber (11) by the vortex generating mechanism before reaching the main chamber (12).

In one embodiment of the invention, the first parameter is selected from the temperature of the clean material (5) at the outlet of the delacquering unit (1), the amount of oxygen in the delacquering unit (1) and the pressure in the delacquering unit (1); and the second parameter is selected from the rotation speed of the recirculation fan (19), the position of an oxygen gate valve to the furnace burner and the position of a gas gate valve to the gas extraction system.

More specifically, in step g) the control system can execute a first control loop comprising the following steps:

i) measuring the temperature of the clean material at the outlet of the delacquering unit;
ii) comparing said temperature with a clean material temperature reference value that depends on the amount of organic compounds in the material to be treated (3);
iii) acting on a second parameter which is the rotation speed of the recirculation fan (19).

Likewise, in step g) the control system can execute a second control loop comprising the following steps:

i) measuring the amount of oxygen in the delacquering unit;
ii) comparing said value with a reference value of oxygen percentage that depends on the amount of organic compounds in the material to be treated (3);
iii) acting on a second parameter which is the amount of oxygen that is introduced into the furnace burners by acting on an oxygen gate valve to the furnace burners.

The control system, in step g), can also execute a third control loop comprising the following steps:

i) measuring the pressure in the delacquering unit;
ii) comparing said value with a pressure reference value that depends on the amount of organic compounds in the material to be treated (3);
iii) acting on a second parameter which is the amount of gases that are released into the atmosphere by acting on a gate valve to a gas extraction system.

**Claims**

1. A material delacquering and melting equipment **characterised in that** it comprises:

- a delacquering unit (1) which comprises a material inlet (2) to the equipment through which it is introduced waste material to be treated (3) having lacquer, paint or some type of coating, a material outlet (4) through which clean and preheated material (5) exits, a clean gas inlet (6) through which there are introduced clean gases (7) which circulate through the delacquering unit in the opposite direction to a direction of travel of the waste material to be treated (3), and a toxic gas outlet (8) through which exit toxic gases (9) which drag along the lacquer, paint or coating of the waste material to be treated (3);
- a melting furnace (10) with a lateral chamber (11) and a main chamber (12) joined together and wherein the lateral chamber comprises at least one clean material inlet (5) through which the clean material (5) that exits from the delacquering unit is introduced and wherein the main chamber (12) comprises at least one toxic gas inlet (9) connected to the toxic gas outlet of the delacquering unit (1), a clean gas outlet (15) connected to the clean gas inlet (7) of the delacquering unit (1) and a molten material outlet (16) through which the clean material, that has been introduced through the clean material inlet (13) of the lateral chamber (11), exits already molten, and wherein the furnace (10) comprises at least one oxygen gate valve to burners of the furnace;
- a gas recirculation fan (19) arranged between the delacquering unit (1) and the furnace (10);
- a gas extraction system with at least one gas gate valve to said gas extraction system;
- a control system configured to act on at least a second parameter of an element of the equipment based on a measurement of at least a first parameter of the delacquering unit (1) and a reference value that depends on the type of material to be treated (3).

2. The equipment according to claim 1 comprising at least a first thermocouple configured to measure the temperature of the clean material (5) at the outlet of the delacquering unit (1), an oxygen measurement sensor in the delacquering unit (1) or a pressure measurement sensor in the delacquering unit (1).

3. The equipment according to any one of the preceding claims wherein:

- the first parameter is selected from:

- the temperature of the clean material (5) at the outlet of the delacquering unit (1);
- the amount of oxygen in the delacquering unit (1); and
- the pressure in the delacquering unit (1);

and the second parameter is selected from:

- the rotation speed of the recirculation fan (19);
- the position of an oxygen gate valve to the furnace burner; and
- the position of a gas gate valve to the gas extraction system.

4. The equipment according to any one of the preceding claims additionally comprising a cyclone (17) arranged between the toxic gas outlet (8) of the delacquering unit (1) and the toxic gas inlet (14) of the furnace (10) connected to the delacquering unit (1) through a first recirculation duct and to the furnace (10) through a second recirculation duct.

5. The equipment according to claim 4 wherein the recirculation fan (19) is arranged in the second recirculation duct.

6. The equipment according to any one of the preceding claims wherein the lateral chamber (11) of the furnace (10) comprises a vortex generation mechanism configured to generate a vortex in the molten material (18) located in said first lateral chamber (11).

7. The equipment according to claim 6 wherein the vortex generation mechanism is oriented such that the vortex generated is facing the clean material inlet (13) such that the clean material (5) entering the furnace (10) reaches the main chamber (12) by passing through the vortex generated in the molten material (18) located in the lateral chamber (11).

8. The equipment according to any one of the preceding claims comprising, in the main chamber (12) of the furnace (10), an additional gas outlet (20) through which clean gases (7) exit from the main chamber (12) to the environment through the gas extraction system.

9. The equipment according to claim 8 additionally comprising a gas filtering system arranged after the additional outlet (20).

10. The equipment according to any one of the preceding claims wherein the main chamber (12) of the furnace (10) has a domed configuration.

11. A material delacquering and melting method in an equipment as described in any one of claims 1 to 10, comprising the following steps:

a) introducing material to be treated (3) into the equipment through the material inlet (2) of the delacquering unit (1) and circulating said material to be treated (3) in a direction of travel through the delacquering unit toward the clean material outlet (4);
b) introducing clean gases (7) through the clean gas inlet (6) of the delacquering unit (1) and circulating said clean gases (7) through the delacquering unit (1) in a direction opposite to that of travel of the material to be treated (3) to a toxic gas outlet (8);
c) introducing into the furnace (10), through the clean material inlet (13), the clean material (5) that exits from the delacquering unit (1) and heating said clean material (5) until it melts and sending the molten material (18) to a molten material outlet (16);
d) recirculating toxic gases from the delacquering unit up to the furnace;
e) introducing the toxic gases (9) from the delacquering unit (1) into the furnace (10) through the toxic gas inlet (14), heating same in the main chamber (12) of the furnace (10) until reaching a predetermined temperature that allows the toxic compounds of the toxic gases (9) to be burned and keeping same at said temperature for a predetermined time that allows the burning process of the toxic compounds to be completed;
f) extracting the clean gases (7) from the furnace (10) where at least a part of said clean gases (7) is extracted through the clean gas outlet (15) and sent to the clean gas inlet (6) of the delacquering unit (1); and
g) in continuous, measuring with the control system the at least one first parameter of the delacquering unit (1) and based on said measurement and a reference value that depends on the type of material to be treated (3) acting on the at least one second parameter of an element of the equipment.

12. The method according to claim 11 wherein, in step f), the clean gases (7) are partially extracted from the furnace (10) into the atmosphere through the additional outlet (20).

**13.** The method according to claim 12 comprising a step of sending the clean gases (7) that exit through the additional outlet (20) to a filtering system.

**14.** The method according to any one of claims 11 to 13 wherein in step c) the clean material (5) is passed through the vortex generated in the lateral chamber (11) by the vortex generating mechanism before reaching the main chamber (12).

**15.** The method according to any one of claims 11 to 14 wherein the first parameter is selected from:

- the temperature of the clean material (5) at the outlet of the delacquering unit (1);
- the amount of oxygen in the delacquering unit (1); and
- the pressure in the delacquering unit (1);

and the second parameter is selected from:

- the rotation speed of the recirculation fan (19);
- the position of an oxygen gate valve to the furnace burner; and
- the position of a gas gate valve to the gas extraction system.

**16.** The method according to any one of claims 11 to 15 wherein in step g) the control system executes a first control loop comprising the following steps:

i) measuring the temperature of the clean material at the outlet of the delacquering unit;
ii) comparing said temperature with a clean material temperature reference value that depends on the amount of organic compounds in the material to be treated (3);
iii) acting on a second parameter which is the rotation speed of the recirculation fan (19).

**17.** The method according to any one of claims 11 to 16 wherein in step g) the control system executes a second control loop comprising the following steps:

i) measuring the amount of oxygen in the delacquering unit;
ii) comparing said value with a reference value of oxygen percentage that depends on the amount of organic compounds in the material to be treated (3);
iii) acting on a second parameter which is the amount of oxygen that is introduced into the furnace burners by acting on an oxygen gate valve to the furnace burners.

**18.** The method according to any one of claims 11 to 17 wherein in step g) the control system executes a third control loop comprising the following steps:

i) measuring the pressure in the delacquering unit;
ii) comparing said value with a pressure reference value that depends on the amount of organic compounds in the material to be treated (3);
iii) acting on a second parameter which is the amount of gases that are released into the atmosphere by acting on a gate valve to a gas extraction system.

FIG.1

FIG. 2

## INTERNATIONAL SEARCH REPORT

| International application No |
| --- |
| PCT/ES2024/070326 |

**A. CLASSIFICATION OF SUBJECT MATTER**

INV. F27B3/04    F27B3/28    F27B19/04    F27D17/00    F27D19/00
         C22B1/00    C22B21/00

ADD.

According to International Patent Classification (IPC) or to both national classification and IPC

**B. FIELDS SEARCHED**

Minimum documentation searched  (classification system followed by classification symbols)

F27B   F27D

Documentation searched other than minimum documentation to the extent that such documents are included  in the fields searched

Electronic data base consulted during the  international search (name of data base and,  where practicable, search terms used)

EPO-Internal, WPI Data

**C. DOCUMENTS CONSIDERED TO BE RELEVANT**

| Category* | Citation of document, with indication,  where appropriate, of the relevant passages | Relevant to claim No. |
| --- | --- | --- |
| A | US 10 808 294 B2 (ABULNAGA BAHA ELSAYED [US]) 20 October 2020 (2020-10-20) figures 1-7 column 1, line 5 - line 15 column 3, line 65 - column 4, line 25 column 5, line 27 - column 9, line 57 ----- | 1-18 |
| A | GB 1 508 935 A (ALUMAX INC) 26 April 1978 (1978-04-26) figures 1-3 page 1, line 1 - page 2, line 74 page 2, line 95 - page 5, line 41 ----- | 1-18 |
| A | GB 2 493 493 A (MELTING SOLUTIONS LTD [GB]) 13 February 2013 (2013-02-13) figures 1-12 page 1 - page 3 page 5 - page 11 ----- | 1-18 |

-/--

| [x] Further documents are listed in the  continuation of Box C. | [x] See patent family annex. |
| --- | --- |

\* Special categories of cited documents :

"A" document defining the general state of the art which is not considered to be of particular relevance

"E" earlier application or patent but published on or after the international filing date

"L" document which may throw doubts on priority  claim(s) or which is cited to establish the publication date of another  citation or other special reason (as specified)

"O" document referring to an oral disclosure, use,  exhibition or other means

"P" document published prior to the international filing date but later than the priority date claimed

"T" later document published after the international filing date or priority date and not in conflict with the application but cited to understand the principle or theory underlying the invention

"X" document of particular relevance:; the claimed invention cannot be considered novel or cannot be considered to involve an inventive step when the document is taken alone

"Y" document of particular relevance:; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 20 September 2024 | 30/09/2024 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Jung, Régis |
| --- | --- |

Form PCT/ISA/210 (second sheet) (April 2005)

## INTERNATIONAL SEARCH REPORT

| | International application No |
|---|---|
| | PCT/ES2024/070326 |

**C(Continuation).    DOCUMENTS CONSIDERED TO BE RELEVANT**

| Category* | Citation of document, with indication, where appropriate, of the relevant passages | Relevant to claim No. |
|---|---|---|
| A | CA 1 099 507 A (AUTOMATED PROD SYST) 21 April 1981 (1981-04-21) column 3, line 40 - column 4, line 39 column 4, line 64 - column 11, line 68 - - - - - | 1-18 |

Form PCT/ISA/210 (continuation of second sheet) (April 2005)

## INTERNATIONAL SEARCH REPORT
Information on patent family members

| International application No |
|---|
| PCT/ES2024/070326 |

| Patent document cited in search report | | | Publication date | Patent family member(s) | | | Publication date |
|---|---|---|---|---|---|---|---|
| US | 10808294 | B2 | 20-10-2020 | NONE | | | |
| GB | 1508935 | A | 26-04-1978 | FR | 2336649 | A1 | 22-07-1977 |
| | | | | GB | 1508935 | A | 26-04-1978 |
| | | | | IT | 1067854 | B | 21-03-1985 |
| | | | | JP | S5280210 | A | 05-07-1977 |
| | | | | JP | S5947015 | B2 | 16-11-1984 |
| | | | | SE | 413547 | B | 02-06-1980 |
| | | | | US | 4010935 | A | 08-03-1977 |
| GB | 2493493 | A | 13-02-2013 | NONE | | | |
| CA | 1099507 | A | 21-04-1981 | CA | 1099507 | A | 21-04-1981 |
| | | | | GB | 1578689 | A | 05-11-1980 |
| | | | | US | 4264060 | A | 28-04-1981 |